(19) Europäisches Patentamt

European Patent Office

Office européen des brevets

(11) **EP 1 504 879 A2**

(12) **EUROPÄISCHE PATENTANMELDUNG**

(43) Veröffentlichungstag:
**09.02.2005 Patentblatt 2005/06**

(51) Int Cl.⁷: **B29C 65/16**, B29C 65/78
// B29L22:00, B29L31:34

(21) Anmeldenummer: **04018435.0**

(22) Anmeldetag: **04.08.2004**

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL HR LT LV MK**

(30) Priorität: **07.08.2003 DE 10336263**

(71) Anmelder: **ROBERT BOSCH GMBH**
**70442 Stuttgart (DE)**

(72) Erfinder:
• **Krause, Ralph**
  **71334 Waiblingen (DE)**
• **Hickl, Hubert**
  **71384 Weinstadt (DE)**
• **Beiermeister, Bernd**
  **71711 Steinheim-Kleinbottwar (DE)**

(54) **Verfahren sowie Gestaltung der Fügezone zur Einstellung einer Position von Kunststoffteilen für eine stoffschlüssige Verbindung der Bauteile**

(57) Die Erfindung betrifft ein Verfahren zur Positionierung zweier Bauteile (2, 3) während des Laserschweißens, wobei ein Bauteil (2) eine Nut (15) und das andere Bauteil (3) eine mit einer Rippe (19) verstärkte Feder (27), aufweist. Das Verfahren ist durch folgende Schritte gekennzeichnet: Einspannen der Bauteile (2, 3) in eine obere Spannkralle (11) oder obere Werkstückaufnahme (33) und eine untere Spannkralle (23) oder untere Werkstückaufnahme (35), wobei entweder die obere Spannkralle (11) oder obere Werkstückaufnahme (33) oder die untere Spannkralle (23) oder die untere Werkstückaufnahme (35) oder die obere Spannkralle (11) und die untere Spannkralle (23) oder die obere Werkstückaufnahme (33) und die untere Werkstückaufnahme (35) positionierbar sind, Einführen der Feder (27) in die Nut (15), so dass sich zwischen Feder (27) und Nutgrund (18) ein Luftspalt (29) ausbildet, Positionieren der Bauteile (2, 3) und Verschweißen der Bauteile (2, 3) mit einem Laser (31) entlang der Rippe (19) auf der Feder (27).

Fig. 3

**Beschreibung**

Technisches Gebiet

Zur Erzeugung qualitativ hochwertiger Schweißverbindungen werden Laserschweißverfahren eingesetzt. Durch Laserschweißverfahren lassen sich auch Bauteile mit komplexen Geometrien gut verbinden. Insbesondere bei Bauteilen aus Kunststoff zeigt sich, dass aufgrund der im Vergleich zu Metallbauteilen schon bei der Herstellung größeren Bauteiltoleranzen auch an der Schweißverbindung größere Toleranzen zugelassen werden müssen. Ein Ausrichten der zu verbindenden Teile auf ein vorgegebenes Maß ist oftmals nicht möglich, da sonst wegen der großen Bauteiltoleranz an der Fügestelle Spalten entstehen, die sich durch Laserschweißen nicht verbinden lassen.

Stand der Technik

Laserschweißen ist ein Verfahren, das sich sowohl für metallische als auch nichtmetallische, schweißbare Werkstoffe eignet. Laserverschweißungen werden im Allgemeinen ohne die Zugabe von Zusatzstoffen durchgeführt. Hierzu werden die beiden Schweißpartner aufeinander gepresst und durch Energieeinbringung mit einer Laserquelle verschweißt. Insbesondere beim Schweißen von Kunststoffteilen wird zwischen Stumpf- und Durchlichtschweißen unterschieden. In beiden Fällen wird die Schweißstelle durch Absorption des Laserlichtes geometrisch und thermisch exakt erwärmt. Hierfür ist es Voraussetzung, dass zumindest einer der beiden zu fügenden Werkstoffe das Laserlicht mit seiner spezifischen Wellenlänge gut absorbiert, um im Bereich des auftreffenden Laserstrahls zu schmelzen und sich so mit mit dem anderen Material verbinden zu können.

Beim Laserstumpfschweißen bestehen beide Werkstücke aus laserlichtabsorbierendem Material, so dass beim Schweißen beide Werkstücke aufgeschmolzen werden und sich so verbinden. Im Gegensatz dazu besteht beim Durchstrahlschweißen ein Werkstoff aus einem absorbierenden Material, der andere ist für das Laserlicht zumindest teilweise transparent. Nachfolgend wird der zumindest teilweise für Laserlicht transparente Werkstoff als transparenter Werkstoff bezeichnet. Der Laserstrahl durchdringt den transparenten Werkstoff und wird vom anderen Fügepartner an der Kontaktstelle absorbiert. In diesem Bereich schmilzt der das Laserlicht absorbierende Kunststoff. Durch Wärmeleitung wird an der Kontaktstelle auch das transparente Material aufgeschmolzen und durch ausreichend hohen Druck und ein entsprechend geringen Fügespalt werden die beiden Werkstoffe miteinander verschweißt.

Die für die Verschweissung bekannten Fügegeometrien haben den Nachteil, daß vor dem Verschweißen die Bauteile nicht gegeneinander verschoben werden können, um Ungenauigkeiten der Bauteilmaßhaltigkeit ausgleichen zu können. Ein solcher Toleranzausgleich kann nur dadurch realisiert werden, dass ein zusätzliches Bauelement eingesetzt wird. Ein solches Bauelement beziehungsweise Ausgleichsbauelement erfordert aufwendige Herstellungsverfahren, um die Maßhaltigkeit zu gewährleisten, und einen zusätzlichen Einstell- und Fixierprozess, um es mit den zu schweißenden Werkstücken zu verbinden.

Ein weiterer Nachteil der zur Zeit eingesetzten Laserschweißverfahren für Kunststoffbauteile liegt darin, dass ein Einstellen und Überprüfen des Axialmaßes vor dem Schweißen nicht möglich ist. Wenn zur Einstellung des Axialmaßes der Bauteile keine Schweißwegbegrenzung vorhanden ist, ist der axiale Schweißweg der Bauteile teilweise prozessabhängig. Das heißt, dass in der Haltephase während des Überganges vom Schmelze- in den Erstarrungszustand des Kunststoffes unter Druckbeaufschlagung ein Nachsinken auftritt, was zu einer Verringerung des Axialmaßes führt. Wenn zur Einstellung des Axialmaßes eine Schweißwegbegrenzung vorhanden ist, kann durch die Schweißwegbegrenzung und die damit erfolgende feste Position der Bauteile zueinander der Druck in der Haltephase zu niedrig sein. Dadurch sind Qualitätseinbußen hinsichtlich der Festigkeit und der Dichtheit der Schweißnaht möglich.

Ein Laserschweißverfahren, bei welchem die Teile zueinander positioniert werden können, ist in DE 199 19 191 A1 beschrieben. Bei dem hier dargestellten Verfahren wird das das Laserlicht absorbierende Bauteil schrittweise durch Laserlicht erwärmt, bis über die gesamte Schweißnaht eine Temperatur knapp unterhalb der Schmelztemperatur vorliegt. Die so vorbehandelten Bauteile werden zueinander richtig positioniert und gegeneinander gepresst. In einem weiteren Schritt wird dann das das Laserlicht absorbierende Bauteil weiter erwärmt, so dass es im Bereich der Fügezone aufschmilzt. Durch Wärmeleitung schmilzt auch das für Laserlicht transparente Bauteil im Bereich der Schweißnaht auf und beide Bauteile werden miteinander verschweißt. Die Nivellierung der Fügeflächen erfolgt bei diesem Verfahren durch Nachgeben oder Verdrängen des erweichten Werkstoffs. Hierdurch können Toleranzunterschiede in Form und Lage der jeweiligen Fügefläche ausgeglichen werden. Da aber bereits verschweißte Abschnitte dazu führen, dass sich die Teile nicht mehr zueinander bewegen lassen, muss die gesamte Schweißnaht auf einmal plastifiziert werden.

In WO 95/26869 wird ein Laserschweißverfahren zur Herstellung eines Gehäuses aus Kunststoff beschrieben. Die beiden Schweißpartner, wobei der dem Laserstrahl zugewandte aus lasertransparentem Werkstoff besteht, werden mittels einer Kraft aufeinander gepresst. Durch die Energieeinbringung werden die beiden Werkstoffe in der Fügezone lokal aufgeschmolzen und durch die Druckkraft miteinander verschweißt. Während des Schweißvorganges findet hier keine Relativbewegung der Schweißpartner statt. Auch können die Schweißpartner vor der Verschmelzung nicht in eine bestimmte Position - zum Toleranzausgleich von beispielsweise im Gehäuseinneren angeordneten Bauelementen - gebracht werden, da der dabei entstehende Luftspalt eine Laserverschweißung unmöglich macht.

Kunststoffbauteile, an denen jeweils exakt zu positionierende Einbauteile angebracht sind, müssen in engen Toleranzgrenzen miteinander verschweißt werden. Dies trifft zum Beispiel für Gehäuse für elektronische Bauteile wie Sensoren zu. Hierbei befindet sich jeweils ein Sensorteil im Deckel und ein Sensorteil im Gehäuseunterteil. Um die beiden Sensorteile in einer engen Toleranz zueinander zu positionieren, müssen Deckel und Gehäuseunterteil exakt zueinander positioniert werden. Bei herkömmlichen Verfahren ist zum Anbringen einer Laserverschweißung dazu ein Ausgleichsbauelement notwendig. Neben Sensorteilen in Deckel und Gehäuseunterteil können sich auch Dichtungsflächen im Deckel und Gehäuseunterteil befinden, zwischen die ein elastisch gehaltenes Bauelement, zum Beispiel eine axial wirkende Dichtung eingelegt wird. Dabei ist ein eng tolerierte Maß zwischen den Dichtungsflächen wichtig, um die Funktion der in Fügerichtung wirkenden Dichtung zu gewährleisten.

Darstellung der Erfindung

Bei dem hier dargestellten erfindungsgemäßen Verfahren werden die beiden Fügepartner so gestaltet, dass sowohl vor als auch während des Schweißprozesses eine Bewegung der beiden Schweißpartner im Schweißnahtbereich zueinander möglich ist und damit ein Ausgleich von Toleranzen zum Beispiel der im Gehäuseinneren angeordneten Bauelemente ermöglicht wird. Hierdurch wird erreicht, ohne den Einsatz zusätzlicher Ausgleichsbauelemente und damit anfallender Kosten sowie ohne zusätzliche Anlagen und den entsprechenden Investitionen zur Fixierung des Ausgleichsbauelementes eine Positionierung der Bauteile zueinander zu realisieren.

Um einen Ausgleich von Toleranzen in Fügerichtung zu ermöglichen, hat ein Bauteil einen mindestens eine Anlagefläche aufweisenden Schenkel und das andere eine mit einer Rippe verstärkte Bauteilwand. Die Bauteile sind so ausgebildet, dass der notwendige Kontakt zwischen den Schweißpartnern unter Einbeziehung aller Toleranzen und die für den Schweißvorgang notwendige Flächenpressung gewährleistet ist, ohne dass während des Schweißprozesses eine zusätzliche äußere Kraft auf die Fügezone aufgebracht werden muss.

Das erfindungsgemäße Verfahren zum Positionieren zweier Bauteile während des Laserschweißens umfasst folgende Schritte:

- Einsetzen oder Einspannen der Bauteile in eine obere Halterung und eine untere Halterung, wobei zumindest eine der Halterungen positionierbar ist,

- Einführen der mit der Rippe versehenen zweiten Bauteilwand in die mit zumindest einer Anlagefläche versehene erste Bauteilwand bis auf ein vorab ermitteltes Positionsmaß, so dass sich zwischen der Oberseite der Seitenwand und der Innenfläche der Schulter ein Luftspalt ausbildet oder bis auf der Oberseite der zweiten Bauteilwand angebrachte Anschlagelemente, die mit einer Anschlagfläche versehen sind, die Innenfläche der Schulter kontaktieren,

- Verschweißen der Bauteile mit einem Laser entlang der Rippe.

Hierbei besteht die Möglichkeit, dass das Positionieren der Bauteile und das Verschweißen gleichzeitig erfolgt, wobei es dazu notwendig ist, die gesamte umlaufende Fügezone durch den Laser zu erwärmen. Eine andere Möglichkeit besteht darin, dass zuerst die Bauteile positioniert und daran anschließend verschweißt werden. Das erfindungsgemäße Verfahren zum Verschweißen zweier Bauteile zeichnet sich dadurch aus, dass entweder die Bauteile ortsfest sind und sich der Laser bewegt oder dass der Laser ortsfest ist und die Bauteile mitsamt ihrer Aufnahme bewegt werden. Zudem ist es auch möglich, dass sowohl die Bauteile mitsamt ihren Aufnahmen als auch der Laser relativ zueinander bewegt werden.

Als Halterungen für die Bauteile eignen sich entweder Spannkrallen oder Werkstückaufnahmen. Dabei ist es auch möglich, ein Bauteil in einer Spannkralle und das zweite Bauteil in einer Werkstückaufnahme aufzunehmen.

Die Bauteile sind vorzugsweise so ausgebildet, dass beim Zusammenführen der Bauteile die Anlagefläche des ersten Bauteiles von der Rippe des zweiten Bauteiles nach außen gedrückt wird und sich so entlang der gesamten Rippe ein Anpressdruck einstellt.

Wenn von den verschweißten Kunststoffteilen große Betriebskräfte aufgenommen werden sollen oder an die verschweißten Kunststoffteile hohe Dichtigkeitsanforderungen gestellt werden, ist es notwendig, dass im gesamten Bereich der Schweißnaht eine ständige Flächenpressung zwischen beiden Fügepartnern herrscht. Durch die Flächenpressung im Bereich der gesamten Schweißnaht wird vermieden, dass durch Lufteinschlüsse Fehler in der Schweißnaht auftreten. Die notwendige Flächenpressung wird dadurch erreicht, dass der Schenkel, der die Auflagefläche aufweist, so dünnwandig gestaltet ist, dass er flexibel ist und sich beim Zusammensetzen der Teile unter einer vorzugsweise elastischen Vorspannung überall bündig an die Rippe der anderen Bauteilwand anlegt. Auf diese Weise wird eine ausreichende Flächenpressung zwischen den zu verschweißenden Bauteilen erreicht, ohne dass eine zusätzliche Schweißkraft von außen auf die Fügezone aufgebracht werden muss.

Damit die Bauteile mit einem Laserschweißverfahren verschweißt werden können, besteht das Werkstück mit dem eine Anlagefläche aufweisenden Schenkel aus einem für Laserlicht zumindest teilweise transparenten Werkstoff, während das andere eine mit einer Rippe verstärkte Bauteilwand, die das Laserlicht absorbiert, aufweist. Hierbei kann die Rippe zum Beispiel trapezförmig oder dreieckförmig oder rechteckförmig oder in Form eines Kreisausschnittes ausgebildet sein. Der mindestens eine Anlagefläche aufweisende Schenkel kann auch eine Wand einer rechteckförmig oder trapezförmig beschaffenen Nut sein. Insbesondere bei großen Bauteilen oder bei nicht rotationssymmetrischen Bauteilen ist der mindestens eine Anlagefläche aufweisende Schenkel Teil einer Nut.

Die Außenkontur der Rippe ist so gestaltet, dass sich die beiden Bauteile vor der Verschweißung an mindestens einer umlaufenden Linie berühren. Während des Schweißvorganges werden die Bauteile in der Fügezone aufgeschmolzen. Durch die lokale Plastizität und die anliegende Anpressung werden die Bauteile in der Fügezone zusammengeschoben. Hierdurch wird die mindestens eine Linienberührung in eine Flächenberührung überführt, wodurch sich die Breite der Verschweißung und damit die Festigkeit der Fügeverbindung erhöht.

Insgesamt kommt dem hier dargestellten erfindungsgemäßen Verfahren eine große Bedeutung zu, da Kunststoffbauteile kostengünstig herzustellen sind und im allgemeinen wesentlich höhere Bauteiltoleranzen aufweisen verglichen mit kostenintensiv spanend hergestellten Metallteilen. Durch die Möglichkeit, die Bauteile relativ zueinander zu bewegen, können mit dem erfindungsgemäßen Verfahren trotz hoher Bauteiltoleranzen kleine Toleranzen der gefügten Baugruppen erreicht werden. So liegen zum Beispiel die Baugruppentoleranzen durch Spritzguss gefertigter und anschließend gefügter Bauteile zumeist weit über den geforderten Maßspezifikationen der Funktionselemente wie zum Beispiel Sensorelemente oder Dichtungen, während mit dem erfindungsgemäßen Verfahren Positioniertoleranzen von weniger als 0,05 mm erreicht werden können.

Um eine Relativbewegung der Bauteile zueinander zu ermöglichen, werden die Teile so positioniert, dass sich zwischen der Schulter des mit der Anlagefläche versehenen Teiles und der Wandoberkante des mit der Rippe versehenen Teiles ein Luftspalt ausbildet. Neben der Positionierung der Bauteile mit einem Luftspalt ist es auch möglich, zwischen die Schulter und die Wandoberkante ein Anschlagelement einzubringen. Die Positionierung der Teile erfolgt dann durch die Berührung der Anschlagflächen des Anschlagelementes mit der Wandoberkante und der Schulter.

Zeichnung

Im folgenden wird die Erfindung anhand der Zeichnung näher erläutert.

Es zeigt:

Figur 1    einen erfindungsgemäß ausgebildeten Gehäusedeckel mit Werkstückaufnahme über Noppen,

Figur 2    ein erfindungsgemäß ausgebildetes Gehäuseunterteil mit Werkstückaufnahme über Noppen,

Figur 3    ein erfindungsgemäß ausgebildetes zusammengefügtes Gehäuse mit Werkstückaufnahmen über Noppen,

Figur 4    einen erfindungsgemäß ausgebildeten Gehäusedeckel mit Werkstückaufnahme über Absatz,

Figur 5    ein erfindungsgemäß ausgebildetes Gehäuseunterteil mit Werkstückaufnahme,

Figur 6    ein erfindungsgemäß ausgebildetes zusammengefügtes Gehäuse mit Werkstückaufnahmen,

Figur 7    einen Schnitt durch ein erfindungsgemäß ausgebildetes zusammengefügtes Gehäuse mit einem Anschlagelement,

Figur 8    einen Schnitt durch ein erfindungsgemäß ausgebildetes, zusammengefügtes Gehäuse mit Anschlagelementen nach einer weiteren Ausführungsvariante,

Figur 9    ein erfindungsgemäß ausgebildetes zusammengefügtes Gehäuse mit Noppen zur Aufnahme von Spannkrallen.

Ausführungsvarianten

Im Folgenden bezeichnen gleiche Bezugszeichen gleiche oder entsprechende Bauteile.

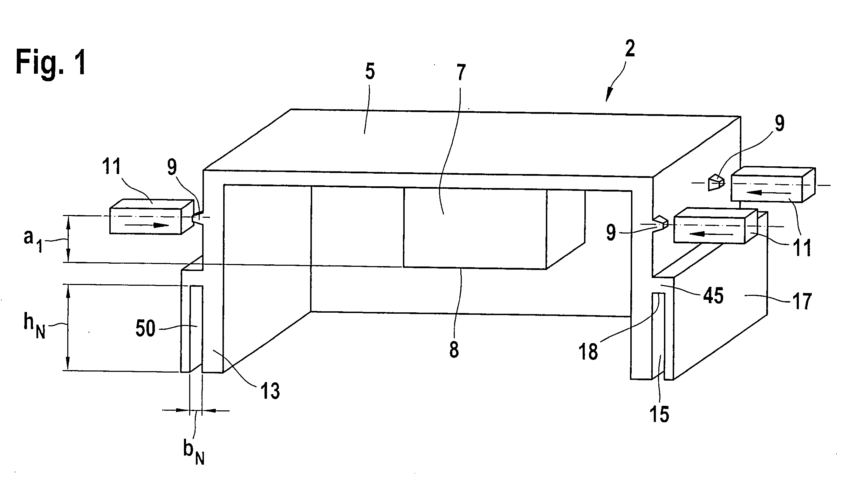

Figur 1 zeigt einen erfindungsgemäß ausgebildeten Gehäusedeckel.

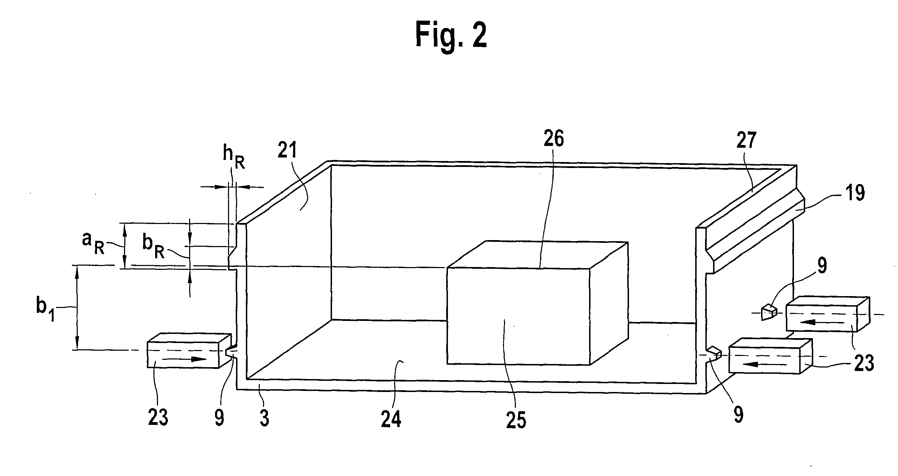

Ein Gehäusedeckel 2 umfasst eine Gehäusedecke 5 und Deckel-Seitenwände 13. An der Gehäusedecke 5 ist ein oberes Einbauteil 7, zum Beispiel ein Sensorelement, das zu einem zweiten Sensorelement, welches in einem Gehäuseunterteil 3 (vgl. Figur 2) angebracht ist, positioniert wird, befestigt. Um den Gehäusedeckel 2 für das Verschweißen mit dem Gehäuseunterteil 3 richtig positionieren zu können, sind an den Seitenwänden 13 des Gehäusedeckels 2 Noppen 9 angebracht, an denen der Gehäusedeckel 2 mit oberen Spannkrallen 11, die mit Hilfe einer Steuerung positionierbar sein können, fixiert wird. Um den Gehäusedeckel 2 mit dem Gehäuseunterteil 3 zu verbinden, befindet sich an den Seitenwänden 13 des Gehäusedeckels 2 eine umlaufende Nut 15. Die Nut 15 wird durch einen Schenkel 17 und eine mit einem Nutgrund 18 versehene Schulter 45 begrenzt. Der Schenkel 17 dient dabei bei der Montage von Gehäusedeckel 2 und Gehäuseunterteil 3 als Anlagefläche 50. Neben der hier dargestellten rechteckförmigen Nut 15 kann die Nut 15 auch einen trapezförmigen Querschnitt annehmen. Um den Gehäusedeckel 2 und das Gehäuseunterteil 3 richtig positionieren zu können, muss die Nut 15 eine ausreichende Tiefe $h_N$ aufweisen. Die Nuttiefe $h_N$ liegt dabei vorzugsweise im Bereich von 2 mm bis 40 mm. Die Breite $b_N$ der Nut 15 muss so gewählt werden, dass an der Verbindungsstelle zwischen Gehäusedeckel 2 und Gehäuseunterteil 3 kein Spalt entsteht. Die Einbaulage des oberen Einbauteiles 7 wird durch das erste Deckelbaugruppenmaß $a_1$ angegeben, das den Abstand von der Unterkante 8 des oberen Einbauteiles 7 bis zur Mitte des Noppens 9 bezeichnet.

Figur 2 zeigt ein erfindungsgemäß ausgebildetes Gehäuseunterteil.

Das Gehäuseunterteil 3 umfasst einen Gehäuseboden 24 und Bauteilwände 21. An den Bauteilwänden 21 sind Noppen 9 angebracht, an denen mit unteren Spannkrallen 23, die mit Hilfe einer Steuerung positionierbar sein können, das Gehäuseunterteil 3 fixiert wird.

Auf dem Gehäuseboden 24 befindet sich ein unteres Einbauteil 25, das zum oberen Einbauteil 7 in einer engen Toleranz positioniert wird. Die genaue Position des unteren Einbauteiles 25 im Gehäuse 1 wird durch ein erstes Gehäusebaugruppenmaß $b_1$ von einer Oberkante 26 des unteren Einbauteiles 25 zum Noppen 9 beschrieben. Durch das erste Gehäusebaugruppenmaß $b_1$ und das erste Deckelbaugruppenmaß $a_1$ des oberen Einbauteiles 7 können der Gehäusedeckel 2 und das Gehäuseunterteil 3 so positioniert werden, dass das obere Einbauteil 7 und das untere Einbauteil 25 einen exakt definierten Abstand zueinander aufweisen. Um das Gehäuseunterteil 3 und den Gehäusedeckel 2 miteinander verschweißen zu können, wird, die als Feder 27 dienende Bauteilwand 21, die eine Dicke $w_u$ aufweist, mit einer umlaufenden Rippe 19 versehen. An der Kontaktstelle der umlaufenden Rippe 19 mit dem Schenkel 17 können das Gehäuseunterteil 3 und der Gehäusedeckel 2 verschweißt werden. Die Position der Rippe 19 wird durch den Abstand $a_R$ von der Oberkante des Gehäuseunterteiles zur Unterseite der Rippe und die Breite der Rippe $b_R$ beschrieben. Die Höhe der Rippe $h_R$ ist so zu wählen, dass die Dicke der Bauteilwand 21 plus die Höhe der Rippe $h_R$ um vorzugsweise 0,01 mm bis 3 mm größer ist als die Nutbreite $b_N$. Neben der hier dargestellten trapezförmigen Rippe 19 ist auch eine dreieckförmige oder rechteckförmige Geometrie der Rippe 19 oder eine Rippe 19 in Form eines Kreisabschnitts denkbar.

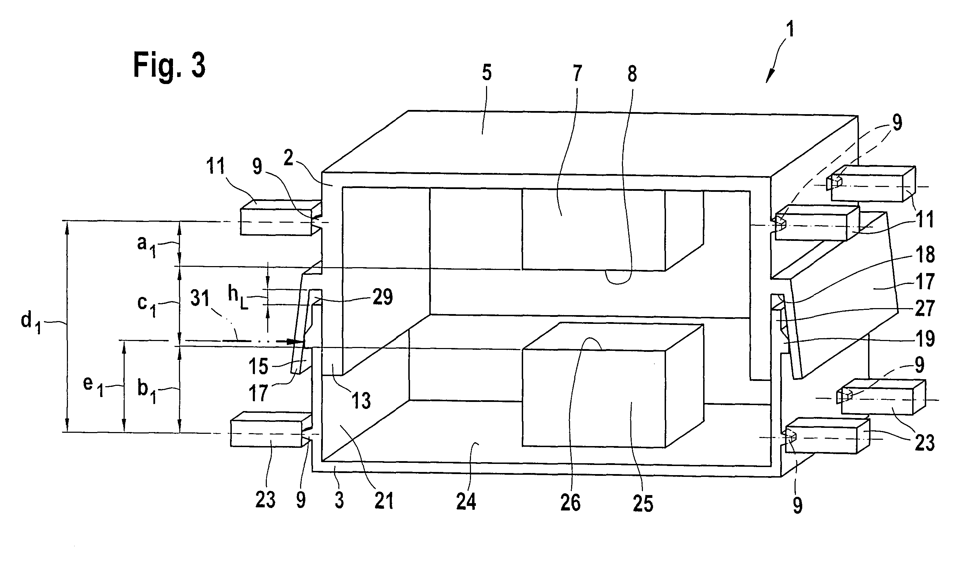

Figur 3 ist ein erfindungsgemäß ausgebildetes zusammengefügtes Gehäuse zu entnehmen.

Das Gehäuseunterteil 3 und der Gehäusedeckel 2 werden so miteinander verbunden, dass die als Feder 27 dienende Bauteilwand 21 des Gehäuseunterteils 3 in die Nut 15 des Gehäusedeckels 2 eingeführt wird. Dabei ist darauf zu achten, dass sich zwischen dem Nutgrund 18 und der Feder 27 ein Luftspalt 29 befindet. Die Höhe des Luftspaltes 29 ist hier mit $h_L$ gekennzeichnet. Der Gehäusedeckel 2 und das Gehäuseunterteil 3 werden mit Hilfe der oberen Spannkrallen 11 und der unteren Spannkrallen 23, wobei entweder die oberen Spannkrallen 11 oder die unteren Spannkrallen 23 oder die oberen Spannkrallen 11 und die unteren Spannkrallen 23 positionierbar sein können, so positioniert, dass sich zwischen der Unterkante 8 des oberen Einbauteiles 7 und der Oberkante 26 des unteren Einbauteiles 25 ein erstes Funktionsmaß $c_1$ einstellt. Das erste Funktionsmaß $c_1$ hängt ausschließlich vom ersten Ausgleichsmaß $d_1$ zwischen den Noppen 9 des Gehäusedeckels 2 und den Noppen 9 des Gehäuseunterteiles 3 nach der Beziehung

$$c_1 = d_1 - (a_1 + b_1)$$

ab. Somit ist die Genauigkeit des ersten Funktionsmaßes $c_1$ abhängig von der Genauigkeit des ersten Deckelbaugruppenmaßes $a_1$ und des ersten Gehäusebaugruppenmaßes $b_1$ sowie von dem ersten Ausgleichsmaß $d_1$. Dabei hängt das erste Ausgleichsmaß $d_1$ ausschließlich von der Maschinengenauigkeit ab.

Die Verbindung von Gehäusedeckel 2 und Gehäuseunterteil 3 erfolgt durch ein Laserschweißverfahren. Hierzu ist der Schenkel 17 des Gehäusedeckels 2 für Laserlicht transparent. Die Schweißung erfolgt in einem ersten Abstand $e_1$ von den Noppen 9 des Gehäuseunterteiles 3 zur Rippe 19 am Gehäuseunterteil 3. Dabei ist der erste Abstand $e_1$ so zu wählen, dass der Fokuspunkt des Laserstrahls die Kontur der Rippe 19 zumindest teilweise überdeckt. Die Rippe 19 an der Feder 27 absorbiert das von einem Laser 31 eingetragene Licht und beginnt zu schmelzen. Durch Wärmeleitung schmilzt auch der Kunststoff des Schenkels 17. Beim Abkühlen werden die beiden Teile miteinander verbunden.

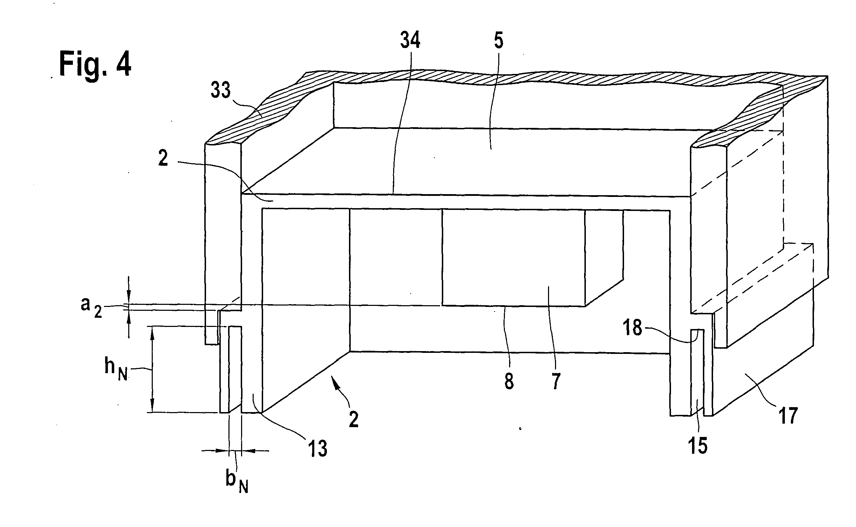

Figur 4 zeigt einen erfindungsgemäß ausgebildeten Gehäusedeckel.

Im Unterschied zu dem in Figur 1 dargestellten Gehäusedeckel 2 weist der in Figur 4 dargestellte Gehäusedeckel 2 keine Noppen 9 an der Deckel-Seitenwand 13 auf. Die Fixierung des Gehäusedeckels 2 erfolgt mittels einer oberen Werkstückaufnahme 33, die mit Hilfe einer Steuerung positionierbar sein kann. Bei der Fixierung des Gehäusedeckels 2 in der oberen Werkstückaufnahme 33 erfolgt die Bestimmung der Position der Unterkante 8 des oberen Einbauteiles 7 an der Gehäusedecke 5 durch ein zweites Deckelbaugruppenmaß $a_2$ von der Außenfläche des Nutbodens 7 zur oberen Außenfläche 34 des Gehäusedeckels 2.

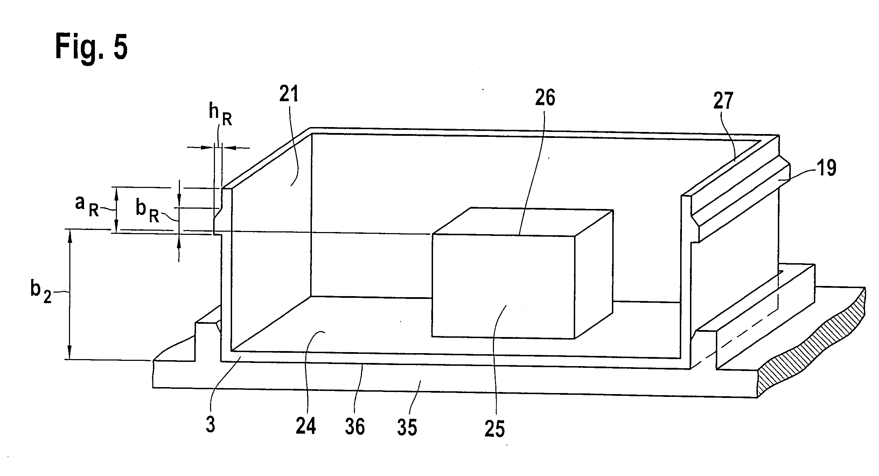

Figur 5 zeigt ein Gehäuseunterteil in einer unteren Werkstückaufnahme.

In einer zweiten Ausführungsvariante wird das Gehäuseunterteil 3 in einer unteren Werkstückaufnahme 35, die mit Hilfe einer Steuerung positionierbar sein kann, zur Positionierung des Gehäuseunterteils 3 fixiert. Der Aufbau des Gehäuseunterteiles 3 in dieser Ausführungsvariante entspricht dem Aufbau des Gehäuseunterteiles 3 nach Figur 2 mit dem Unterschied, dass in dieser Ausführungsvariante die Noppen 9 zur Aufnahme der unteren Spannkrallen 23 nicht erforderlich sind. Zur richtigen Positionierung von Gehäusedeckel 2 zu Gehäuseunterteil 3 wird ein zweites Gehäusebaugruppenmaß $b_2$ von der Oberkante 26 des unteren Einbauteiles 25 zur unteren Außenfläche 36 des Gehäuseunterteiles 3 bestimmt.

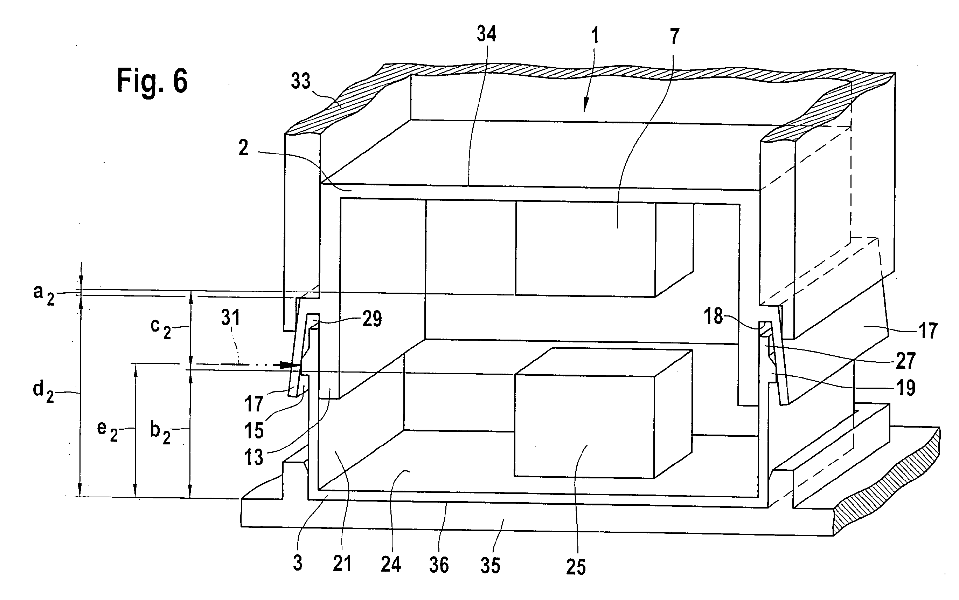

Figur 6 zeigt ein erfindungsgemäß ausgebildetes Gehäuse mit oberer und unterer Werkstückaufnahme.

In Figur 6 ist das Gehäuse 1 mit dem mit dem Gehäusedeckel 2 verbundenen Gehäuseunterteil 3 dargestellt. Zur Verbindung nimmt die Nut 15 des Gehäusedeckels 2 die Feder 27, die mit der Rippe 19 versehen ist, auf. Die Positionierung von Gehäusedeckel 2 und Gehäuseunterteil 3 erfolgt über die obere Werkstückaufnahme 33 und die untere Werkstückaufnahme 35, wobei entweder die obere Werkstückaufnahme 33 oder die untere Werkstückaufnahme 35 oder die obere Werkstückaufnahme 33 und die untere Werkstückaufnahme 35 positionierbar sein können. Die Positionierung kann dazu zum Beispiel mit Hilfe einer Einstellspindel erfolgen. Mit dem bekannten zweiten Deckelbaugruppenmaß $a_2$ und dem zweiten Gehäusebaugruppenmaß $b_2$ lässt sich über ein zweites Ausgleichsmaß $d_2$ ein zweites Funktionsmaß $c_2$ nach der Beziehung

$$c_2 = d_2 + a_2 - b_2$$

einstellen. Die Einstellung des zweiten Funktionsmaßes $c_2$ erfolgt durch das Verstellen der oberen Werkstückaufnahme 33 oder der unteren Werkstückaufnahme 35 oder der oberen Werkstückaufnahme 33 und der unteren Werkstückaufnahme 35. Nach der korrekten Positionierung von Gehäusedeckel 2 und Gehäuseunterteil 3 wird das Gehäuseunterteil 3 mit dem Gehäusedeckel 2 mit dem Laser 31 verschweißt. Zum Verschweißen nimmt der Laser 31 einen zweiten Abstand $e_2$ von der unteren Außenfläche 36 des Gehäuseunterteiles 3 zur umlaufenden Rippe 19 an der Bauteilwand 21 des Gehäuseunterteiles 3 ein. Der zweite Abstand $e_2$ wird dazu so gewählt, dass der Focuspunkt des Laserstrahls die Kontur der Rippe 19 zumindest teilweise überdeckt.

In einer bevorzugten Ausführungsform verläuft der Laserstrahl des Lasers 31 senkrecht auf die Nutwand 17. Um den Gehäusedeckel 2 mit dem Gehäuseunterteil 3 verschweißen zu können, wird der Schenkel 17 des Gehäusedeckels 2 für das Laserlicht transparent ausgebildet und die umlaufende Rippe 19 des Gehäuseunterteiles 3 ist so beschaffen, dass die umlaufende Rippe 19 das Laserlicht absorbiert. Durch die Absorption wird die Energie des Laserstrahls des Lasers 31 in Wärme umgesetzt. Hierdurch schmilzt die Rippe 19 an der Bauteilwand 21 des Gehäuseunterteiles 3 auf und durch Berührung mit dem Schenkel 17 des Gehäusedeckels 3 wird Wärme an den Schenkel 17 übertragen, wodurch diese ebenfalls aufschmilzt. Hierdurch werden der Gehäusedeckel 2 und das Gehäuseunterteil 3 miteinander verschweißt.

Neben der Positionierung von Gehäusedeckel 2 zu Gehäuseunterteil 3 kann das erfindungsgemäße Verfahren zum Verschweißen von Kunststoffteilen zum Beispiel auch dazu verwendet werden, das Axialmaß zur Vorspannung eines Dichtelementes innerhalb des Gehäuses 1 zu gewährleisten.

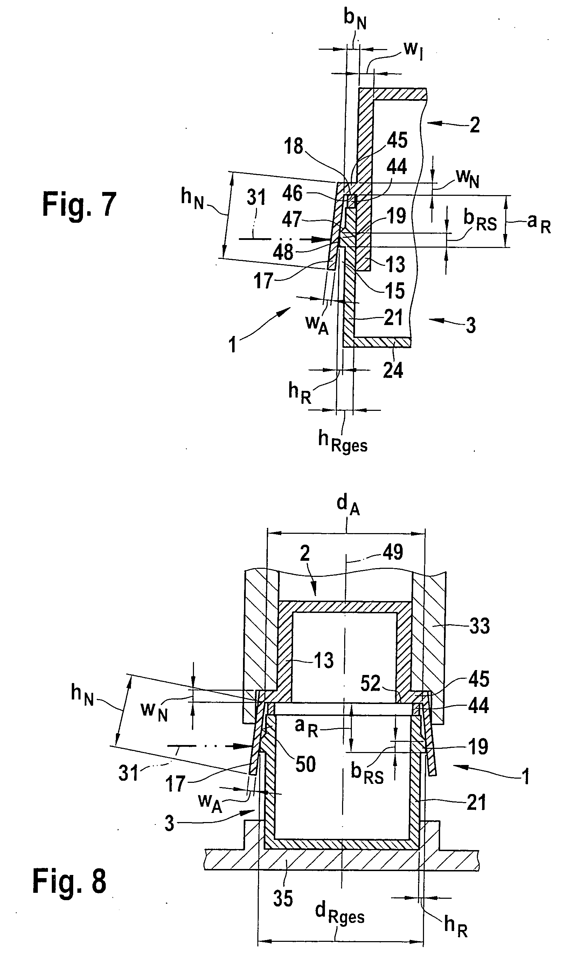

In Figur 7 ist ein Schnitt durch einen Ausschnitt aus einem erfindungsgemäß ausgebildeten Gehäuse mit einem Anschlagelement dargestellt.

Die in Figur 7 dargestellte Deckel-Seitenwand 13 ist mit einer Nut 15 versehen. Die Dicke $w_N$ der den Nutgrund 18 aufweisenden Schulter 45 ist so gewählt, dass sich die Schulter 45 bei einem Aufspreizen der Nut 15 nicht verformt. Demgegenüber ist die Wandstärke $w_A$ des Schenkels 17 so bemessen, dass der Schenkel 17 flexibel ist. Hierdurch wird gewährleistet, dass die mit der Rippe 19 versehene Bauteilwand 21 in die Nut 15 eingeführt werden kann. Die Deckel-Seitenwand 13, die im Bereich der Nut 15 die zweite Nutwand ausbildet, weist eine Dicke w, auf, die so bemessen ist, dass die Deckel-Seitenwand 13 deutlich weniger flexibel ist als der Schenkel 17. Hierdurch wird gewährleistet, dass die Bauteilwand 21 durch den Druck des Schenkels 17 nicht nach innen gebogen wird.

Die genaue Position von Gehäusedeckel 2 zu Gehäuseunterteil 3 wird durch den Einsatz von Anschlagelementen 44 gewährleistet. Hierbei kann als Anschlagelement 44 ein einzelnes durchgängiges Element verwendet werden oder aber es werden einzelne Anschlagelemente 44 eingesetzt, wobei zwischen den Anschlagelementen 44 jeweils ein Luftraum auftritt. Die Rippe 19 an der in Figur 7 dargestellten Bauteilwand 21 ist in Form eines Trapezes ausgebildet. Die dem Gehäuseboden 24 zuweisende Seite der Rippe weist einen rechten Winkel zur Bauteilwand 21 auf. Die dem Gehäuseboden 24 gegenüberliegende Seite der Rippe 19 ist mit einer Fase 47 angeschrägt. Die Fase 47 dient dazu, das Aufschieben der Nut 15 des Gehäusedeckels 2 über die Rippe 19 zu erleichtern. Durch die im Vergleich zur Nutbreite $b_N$ vorzugsweise um 0,01 mm bis 3 mm größere Dicke der Bauteilwand 21 mit Rippe 19, die hier mit $h_{Rges}$ gekennzeichnet ist, wird beim Aufschieben der Nut 15 auf die mit der Rippe 19 versehene Bauteilwand 21 der Schenkel 17 aufgebogen. Hierdurch wird gewährleistet, dass im gesamten Bereich der Rippe 19 ein Kontakt zwischen Schenkel 17 und Rippe 19 herrscht. Durch die Trapezform der Rippe wird eine Rippenschulter 48 ausgebildet, die schmaler als der Rippenansatz ist. Die Rippenschulter 48 weist eine Breite auf, die mit dem Bezugszeichen $b_{RS}$

gekennzeichnet ist. Beim Verschweißen schmilzt die Rippenschulter 48 auf und verbindet sich mit dem Schenkel 17. Hierdurch wird eine flächige Verbindung erreicht. Eine durchgängige Schweißnaht wird dann erreicht, wenn der Abstand der Rippe $a_R$ von der dem Gehäuseboden 24 zuweisenden Seitenfläche der Rippe bis zur Anschlagfläche 46 des Anschlagelementes 44 kleiner ist als die Nuttiefe $h_N$, die vorzugsweise im Bereich von 2 mm bis 40 mm liegt.

In Figur 7 ist der Gehäusedeckel 2 so weit auf das Gehäuseunterteil 3 aufgeschoben, bis die Anschlagfläche 46 am Nutgrund 18 anliegt. Hierdurch wird die Position von Gehäusedeckel 2 zu Gehäuseunterteil 3 definiert. Beim Aufsetzen des Gehäusedeckels 2 auf das Gehäuseunterteil 3 wird die flexibel ausgebildete Nutwand durch die Rippe 19 aufgespreizt. Die dicker ausgebildete und im Vergleich zum Schenkel 17 starrere Deckel-Seitenwand 13 dient als Anlagefläche für die Bauteilwand 21, die dadurch nicht nach innen gebogen werden kann. Die Verschweißung von Gehäusedeckel 2 und Gehäuseunterteil 3 erfolgt durch einen hier schematisch als Pfeil dargestellten Laser 31. Um ein Verschweißen zu ermöglichen, ist der Schenkel 17 für Laserlicht transparent und die Rippe 19 aus einem Laserlicht absorbierenden Material ausgebildet.

Eine weitere Ausführungsvariante eines erfindungsgemäß ausgebildeten Gehäuses mit Werkstückaufnahme ist in Figur 8 dargestellt.

Bei der in Figur 8 dargestellten Ausführungsvariante ist der Gehäusedeckel 2 rotationssymmetrisch um eine Symmetrieachse 49 ausgebildet. Aufgrund der Rotationssymmetrie des Gehäusedeckels 2 ist es nicht notwendig, die Aufnahme für das Gehäuseunterteil 3 als Nut auszubilden. Die Aufnahme des Gehäuseunterteiles 3 erfolgt durch einen mit einer Anlagefläche 50 versehenen Schenkel 17. Zur Positionierung ist der Gehäusedeckel 2 in einer Werkstückaufnahme 33 aufgenommen. Der Gehäusedeckel 2 mit einer Schulter 45 versehen, an deren Außendurchmesser der Schenkel 17 mit der Anlagefläche 50 ausgebildet ist. Die Dicke der Schulter ist mit dem Bezugszeichen $w_N$ und die Höhe des Schenkels 17 mit dem Bezugszeichen $h_N$ gekennzeichnet. Die Dicke $w_A$ des Schenkels 17 ist so zu wählen, dass der Schenkel flexibel ist. Eine durchgehende Berührungslinie der Anlagefläche 50 mit der Rippe 19 des Gehäuseunterteils 3 wird dadurch erreicht, dass der Durchmesser $d_A$ des Gehäusedeckels 2 kleiner gewählt wird als der Gesamtdurchmesser $d_{Rges}$ des Gehäuseunterteils an der Position der Rippe. Zur Positionierung des Gehäusedeckels 2 zum Gehäuseunterteil 3 ist die Schulter 45 mit einer senkrecht zur Deckel-Seitenwand 13 ausgebildeten Innenfläche 52 versehen. Bei Verwendung von Anschlagelementen 44 wird die Anschlagfläche 46 der Anschlagelemente 44 mit der Innenfläche 52 der Schulter 45 in Kontakt gebracht und so der Gehäusedeckel 2 zum Gehäuseunterteil 3 positioniert.

Zur Positionierung des Gehäuseunterteils 3 zum Gehäusedeckel 2 ist das Gehäuseunterteil 3 mit einem ringförmig ausgebildeten, durchgehenden Anschlagelement 44 versehen. Um eine durchgehende Berührungslinie der Rippe 19 mit der Anlagefläche 50 zu erhalten, weist das rotationssymmetrisch ausgebildete Gehäuseunterteil 3 einen Gesamtdurchmesser $d_{Rges}$ auf, der größer bemessen ist, als der Anlageflächendurchmesser $d_A$ des Gehäusedeckels. Die weitere Ausbildung der Bauteilwand 21 und der Rippe 19 entspricht der in Figur 7 dargestellten Ausführungsvariante.

Aufgrund der um die Symmetrieachse 49 ausgebildeten Rotationssymmetrie des Gehäuses 1, ist die Bauteilwand 21 so formstabil, dass auf eine innere Anlagefläche verzichtet werden kann. Aus diesem Grund ist es ausreichend, dass der Gehäusedeckel 2 nur mit einer Schulter 45 und einem eine Anlagefläche 50 aufweisenden Schenkel 17 ausgebildet ist. Die Verschweißung von Gehäuseunterteil 3 und Gehäusedeckel 2 erfolgt durch das Aufschmelzen der Laserlicht absorbierenden Rippe 19. Durch die Berührung wird der Schenkel 17 an der Anlagefläche 50, die für Laserlicht transparent ist, aufgeschmolzen. Beim Abkühlen erstarrt die Kunststoffschmelze und der Gehäusedeckel 2 wird mit dem Gehäuseunterteil 3 verschweißt.

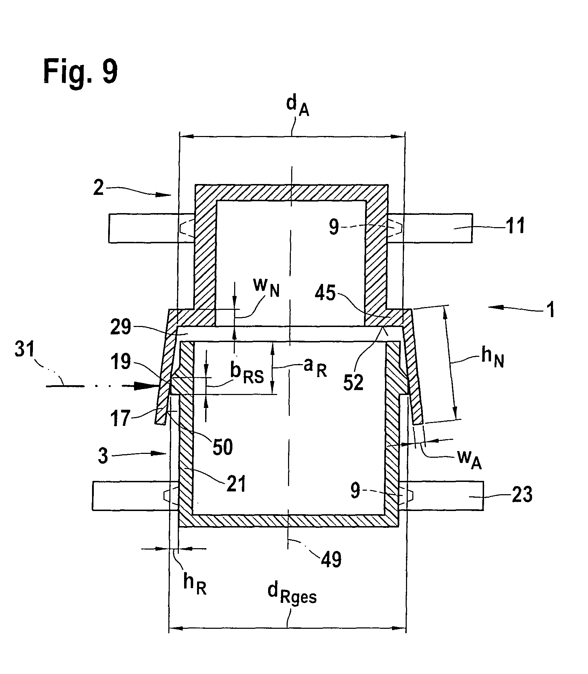

Figur 9 zeigt ein erfindungsgemäß ausgebildetes Gehäuse entsprechend dem in Figur 8 dargestellten Gehäuse. Im Unterschied zu dem in Figur 8 dargestellten Gehäuse 1 erfolgt die Positionierung des Gehäuses 1 nicht durch eine Werkstückaufnahme 33 sondern durch Spannkrallen 11, die an Noppen 9 am Gehäuse 1 aufgenommen werden.

Im Unterschied zu dem in Figur 8 dargestellten Gehäuse 1 erfolgt bei dem in Figur 9 dargestellten Gehäuse 1 die Positionierung von Gehäusedeckel 2 zu Gehäuseunterteil 3 nicht durch Anschlagelemente 44, sondern durch einen Luftspalt 29. Hierzu wird beim Zusammenführen von Gehäuseunterteil 3 und Gehäusedeckel 2 ein Luftspalt 29 zwischen der Oberkante der Bauteilwand 21 und der Innenfläche 52 der Schulter 45 am Gehäusedeckel 2 ausgebildet. Aufgrund des Luftspaltes 29 können Gehäusedeckel 2 und Gehäuseunterteil 3 relativ zueinander bewegt werden, bis die korrekte Position erreicht ist. Nachdem Gehäusedeckel 2 und Gehäuseunterteil 3 korrekt zueinander positioniert sind erfolgt die Verschweißung durch den Laser 31. Hierzu ist der die Anlagefläche 50 aufweisende Schenkel 17 für das Laserlicht transparent ausgebildet und die die Rippe aufweisende Bauteilwand 21 aus einem das Laserlicht absorbierendem Material. Durch das Aufspreizen des die Anlagefläche 50 aufweisenden Schenkels 17 im zusammengesetzten Zustand und den dadurch erzeugten Anpressdruck des Gehäusedeckels auf die Rippe 19 der Bauteilwand 21 wird gewährleistet, dass zumindest eine durchgehende Berührungslinie zwischen Rippe 19 und Anlagefläche 50 existiert.

Bei den in den Figuren 7 bis 9 dargestellten Gehäusen 1, bei dem der als flexible Wand ausgebildete Schenkel 17 nicht Bestandteil einer Nut ist, kann die flexible Wand auch innen liegen und die mit der Rippe 19 versehene Bauteilwand 21 außen. Hierbei muss die Rippe 19 an der Innenseite der Bauteilwand 21 angebracht sein. Weiterhin ist es dann zum Verschweißen von Gehäusedeckel 2 und Gehäuseunterteil 3 erforderlich, dass die die Rippe 19 aufweisende Bauteilwand 21 für Laserlicht transparent ist. Weiterhin ist es bei der in den Figuren 7 bis 9 dargestellten Ausführungsvariante auch möglich, dass sowohl der Schenkel 17 als auch die Bauteilwand 21 flexibel sind.

Für das Verschweißen besteht neben dem sequentiellen Verfahren, bei dem in einem ersten Schritt die Position des Gehäusedeckels 2 zum Gehäuseunterteil 3 eingestellt wird und in einem zweiten Schritt das Gehäuseunterteil 3 mit dem Gehäusedeckel 2 verschweißt wird, auch ein paralleles Verfahren, bei dem beide Schritte gleichzeitig ablaufen. Hierzu ist es notwendig, dass die umlaufende Schweißzone zwischen dem Gehäusedeckel 2 und dem Gehäuseunterteil 3 während des Einstellvorganges plastisch bleibt. Wenn in einem Segment der umlaufenden Schweißzone die Werkstoffe bereits eingefroren sind, ist eine Relativbewegung des Gehäusedeckels 2 zum Gehäuseunterteil 3 nicht mehr möglich. Eine umlaufend aufgeschmolzene Schweißzone kann bei kleinen Komponenten zum Beispiel durch einen Roboter geführten Laser 31 und ortsfeste Komponenten realisiert werden. Bei größeren Bauteilen wird das Bauteil mitsamt den Aufnahmen - hier die oberen Spannkrallen 11 und die unteren Spannkrallen 23 beziehungsweise die obere Werkstückaufnahme 33 und untere Werkstückaufnahme 35 - in Rotation um eine Achse parallel zur Einstellrichtung gebracht, während der Laser 31 ortsfest bleibt. Zudem ist auch möglich, dass sowohl das Bauteil mitsamt den Aufnahmen 11, 23, 33, 35 als auch der Laser 31 relativ zueinander bewegt werden.

Um eine Einstellung der Funktionsmaße $c_1$ oder $c_2$ zu ermöglichen, muss eine Relativbewegung des Gehäusedeckels 2 zum Gehäuseunterteil 3 in Fügerichtung möglich sein. Dieser Freiheitsgrad ist aber nur dann gegeben, wenn die Nut 15 am Gehäusedeckel 2 so tief gestaltet ist, dass die als Feder 27 dienende Bauteilwand 21 nicht auf dem Nutgrund 18 aufsitzt, sondern einen Luftspalt 29 zwischen Nutgrund 18 und Feder 27 in eine Höhe $h_L$ ausbildet. Weiterhin muss der Schenkel 17 und die Deckelseitenwand 13 so weit in das Gehäuseunterteil 3 hineinragen, dass eine ausreichende Überlappung des Schenkels 17 zur umlaufenden Rippe 19 an der Bauteilwand 21 gegeben ist. Hierbei ist darauf zu achten, dass die Flächenpressung zwischen dem Schenkel 17 und der Rippe 19 an der Bauteilwand 21 an jeder Stelle größer als Null ist, das heißt es darf an keiner Stelle ein Spalt zwischen dem Schenkel 17 und der Rippe 19 vorhanden sein. Vorzugsweise sollte die Aufweitung des Schenkels 17 im Bereich der elastischen Verformbarkeit des Werkstoffes des Schenkels 17 liegen. Mit dem erfindungsgemäß vorgeschlagenen Verfahren ergibt sich weder bei dem sequentiellen noch bei dem parallelen Verfahren ein Spalt.

Neben dem in den Figuren 8 und 9 dargestellten rotationssymmetrischen Gehäuseunterteil 3 mit Gehäusedeckel 2 können der Gehäusedeckel 2 und das Gehäuseunterteil 3 auch jede weitere Form annehmen, bei der eine Schweißverbindung mit einem flexiblen Schenkel 17 auf einer Rippe 19 möglich ist.

Neben den in den Figuren 1 bis 9 dargestellten Ausführungsvarianten ist es auch möglich, den Gehäusedeckel 2 mit der mit der Rippe 19 versehenen Bauteilwand 21 zu versehen und das Gehäuseunterteil 3 mit dem als flexible Wand ausgebildeten Schenkel 17 zu versehen. Weiterhin ist es möglich, dass zusätzlich zu den Einbauteilen 7, 25 oder anstelle der Einbauteile 7, 25 Anbauteile außen am Gehäuse 1 angebracht sind. Für diesen Fall kann es notwendig sein, dass das Positionsmaß von Gehäusedeckel 2 zu Gehäuseunterteil 3 an den außen angebrachten Anbauteilen aufgenommen wird.

Das hier vorgeschlagene erfindungsgemäße Verfahren eignet sich zum Verschweißen von Gehäuseteilen, insbesondere zum Verschweißen von Gehäusen für Abgasrückführventile oder Drosselklappen sowie Tankentlüftungsventilen im Kraftfahrzeugbau, bei denen ein Maß im Inneren des Gehäuses eingestellt werden muß, beispielsweise für einen Sensor zur Bestimmung der Position einer Ventilklappe.

Das beschriebene Verfahren der Höhenabstimmung ist auch mit anderen Kunststoffschweißverfahren möglich, bei denen die Energieeinbringung mittels Wärmestrahlung, Wärmeleitung, Wärmekonvektion und Wärmedissipation erfolgt. Beispiele hierfür sind Ultraschallschweißverfahren, Reibschweißverfahren und Heizelementschweißen.

Bezugszeichenliste

| | |
|---|---|
| 1 | Gehäuse |
| 2 | Gehäusedeckel |
| 3 | Gehäuseunterteil |
| 5 | Gehäusedecke |
| 7 | oberes Einbauteil |
| 8 | Unterkante |
| 9 | Noppen |
| 11 | obere Spannkralle |
| 13 | Deckel-Seitenwand |
| 15 | Nut |
| 17 | Schenkel |
| 18 | Nutgrund |
| 19 | Rippe |
| 21 | Bauteilwand |
| 23 | untere Spannkralle |
| 24 | Gehäuseboden |
| 25 | unteres Einbauteil |
| 26 | Oberkante |
| 27 | Feder |

29 Luftspalt
31 Laser
33 obere Werkstückaufnahme
34 obere Außenfläche
35 untere Werkstückaufnahme
36 untere Außenfläche
44 Anschlagelement
45 Schulter
46 Anschlagfläche
47 Fase
48 Rippenschulter
49 Symmetrieachse
50 Anlagefläche

52 Innenfläche

$a_1$     1. Deckelbaugruppenmaß
$a_2$     2. Deckelbaugruppenmaß
$a_R$     Abstand der Rippe
$b_1$     1. Gehäusebaugruppenmaß
$b_2$     2. Gehäusebaugruppenmaß
$b_N$     Breite der Nut
$b_R$     Breite der Rippe
$b_{RS}$     Breite der Rippenschulter
$c_1$     1. Funktionsmaß
$c_2$     2. Funktionsmaß
$d_1$     1. Ausgleichsmaß
$d_2$     2. Ausgleichsmaß
$d_A$     Anlageflächendurchmesser
$d_{Rges}$     Gesamtdurchmesser
$e_1$     1. Abstand
$e_2$     2. Abstand
$h_L$     Höhe des Luftspaltes
$h_N$     Tiefe der Nut
$h_R$     Höhe der Rippe
$h_{Rges}$     Dicke der Bauteilwand 21 mit Rippe 19
$w_A$     Wandstärke
$w_1$     Dicke der Deckel-Seitenwand 13
$w_N$     Dicke der Schulter 45

**Patentansprüche**

1. Verfahren zur Einstellung einer Position von Kunststoffteilen relativ zueinander, in welcher eine stoffschlüssige Verbindung der Bauteile (2, 3) miteinander erfolgt, wobei ein Bauteil (2) zumindest einen mit einer Anlagefläche (50) versehenen Schenkel (17) und das andere Bauteil (3) eine mit einer Rippe (19) versehene Bauteilwand (21) aufweist und wobei die Bauteile (2, 3) zumindest eine flexible Wand aufweisen, mit nachfolgenden Verfahrensschritten:

- Aufnehmen der Bauteile (2, 3) in eine obere Halterung (11, 33) und eine untere Halterung (23, 35), wobei zumindest eine Halterung (11, 23, 33, 35) positionierbar ist,

- Positionieren der mit der Rippe (19) versehenen Bauteilwand (21) gegen den mit zumindest einer Anlagefläche (50) versehenen, an einer Schulter angebrachten Schenkel (17) bis auf ein vorab ermitteltes Positionsmaß, so dass sich zwischen der Oberseite der mit der Rippe (19) versehenen Bauteilwand (21) und einer Innenfläche (52) der Schulter (45) ein Luftspalt ausbildet,
oder
bis auf der Oberseite der Bauteilwand (21) angebrachte Anschlagelemente (44), die mit einer Anschlagfläche(46) versehen sind, die Innenfläche (52) der Schulter (45) kontaktieren,

- Verschweißen der Bauteile (2, 3) mit einem Laser (31) entlang der Rippe (19).

2. Verfahren nach Anspruch 1, **dadurch gekennzeichnet, dass** zuerst die Bauteile (2, 3) positioniert und anschließend verschweißt werden.

3. Verfahren nach Anspruch 1, **dadurch gekennzeichnet, dass** das Positionieren und Verschweißen gleichzeitig erfolgt.

4. Verfahren nach einem oder mehreren der Ansprüche 1 bis 3, **dadurch gekennzeichnet, dass** die obere Halterung eine obere Spannkralle (11) oder eine obere Werkstückaufnahme (33) und die untere Halterung eine untere Spannkralle (23) oder untere Werkstückaufnahme (35) ist.

5. Verfahren nach einem oder mehreren der Ansprüche 1 bis 4, **dadurch gekennzeichnet, dass** die Bauteile (2, 3) ortsfest aufgenommen sind und sich der Laser (31) relativ zu diesen bewegt.

6. Verfahren nach einem oder mehreren der Ansprüche 1 bis 4, **dadurch gekennzeichnet, dass** der Laser (31) ortsfest gehalten ist und die Bauteile (2, 3) mitsamt der Halterung (11, 23, 33, 35) bewegt werden.

7. Verfahren nach einem oder mehreren der Ansprüche 1 bis 4, **dadurch gekennzeichnet, dass** sowohl der Laser (31) als auch die Bauteile (2, 3) mitsamt der Halterung (11, 23, 33, 35) relativ zueinander bewegt werden.

8. Werkstück hergestellt gemäß dem Verfahren nach einem oder mehreren der Ansprüche 1 bis 7, **dadurch gekennzeichnet, dass** das Werkstück ein Gehäuse (1), einen Gehäusedeckel (2) mit darin eingebautem oberem Einbauteil (7) und ein Gehäuseunterteil (3) mit darin eingebautem unteren Einbauteil (25) umfasst, wobei das obere Einbauteil (7) und das untere Einbauteil (25) oder das obere Einbauteil (7) und das Gehäuseunterteil (3) oder der Gehäusedeckel (2) und das untere Einbauteil (25) oder der Gehäusedeckel (2) und das Gehäuseunterteil (3) mit bis zu einer Toleranz von weniger als 0,05 mm zueinander positionierbar sind.

9. Werkstück nach Anspruch 8 **dadurch gekennzeichnet, dass** der zumindest mit einer Anlagefläche (50) versehene Schenkel (17) als Wand einer Nut (15) ausgebildet ist.

10. Werkstück nach Anspruch 8, **dadurch gekennzeichnet, dass** das Bauteil (2), das den mit einer Anlagefläche (50) versehenen Schenkel (17) aufweist, ein Gehäusedeckel ist und dass das Bauteil (3), das die mit einer Rippe (19) versehene Bauteilwand (21) aufweist, ein Gehäuseunterteil ist.

11. Werkstück nach Anspruch 8, **dadurch gekennzeichnet, dass** das Bauteil (3), das die mit der Rippe (19) versehene Bauteilwand (21) aufweist, ein Gehäusedeckel und dass das Bauteil (2), das den mit einer Anlagefläche (50) versehenen Schenkel (17) aufweist, ein Gehäuseunterteil ist.

12. Werkstück nach einem oder mehreren der Ansprüche 8 bis 11, **dadurch gekennzeichnet, dass** die flexible Wand außen liegt.

13. Werkstück nach einem oder mehreren der Ansprüche 8 bis 11, **dadurch gekennzeichnet, dass** die flexible Wand innen liegt.

14. Werkstück nach einem oder mehreren der Ansprüche 8 bis 11, **dadurch gekennzeichnet, dass** der Schenkel (17) und die Bauteilwand (21) flexibel sind.

Fig. 1

# Fig. 2

EP 1 504 879 A2

# Fig. 3

EP 1 504 879 A2

Fig. 4

**Fig. 5**

EP 1 504 879 A2

EP 1 504 879 A2

**Fig. 6**

**Fig. 7**

**Fig. 8**

# Fig. 9